# EUROPEAN PATENT SPECIFICATION

(11) **EP 4 419 287 B1**
(45) Date of publication and mention of the grant of the patent: **07.10.2026**
(21) Application number: 21799203.1
(22) Date of filing: 19.10.2021
(51) Int. Cl.: B23K 26/0622, B23K 26/08, B23K 26/12, B23K 26/244, B23K 26/322, B23K 26/352, B23K 26/359, B23K 26/60, B23K 37/04, B23K 101/00, B23K 101/18, B23K 101/34, B23K 103/04, B23K 103/10

(54) **LOW HAZARD LASER WELDING METHOD WITH DIMPLING FUNCTIONS**
VERFAHREN ZUM GEFAHRLOSEN LASERSCHWEISSEN MIT VERTIEFUNGS-FUNKTIONEN
PROCÉD'E DE SOUDAGE LASER À FAIBLE RISQUE À FONCTIONS DE DÉPRESSIONS

(43) Date of publication of application: 28.08.2024
(73) Proprietor: IPG Photonics Corporation, Marlborough, MA 01752 (US); IPG Laser GmbH & Co. KG, 57299 Burbach (DE)
(72) Inventor: SCHRAMM, Ingo, Webster Road Oxford, Massachusetts 01540 (US); RASCH, Michael, Webster Road Oxford, Massachusetts 01540 (US)
(74) Representative: Kobiako von Gamm, Iouri
(86) International application number: PCT/EP2021/078963
(87) International publication number: WO 2023/066468

(56) References cited:
- EP-A1- 3 357 628
- EP-B1- 2 588 268
- US-A1- 2011 278 265
- US-A1- 2015 306 708
- COLOMBO DANIELE ET AL: "Laser dimpling and remote welding of zinc-coated steels for automotive applications", THE INTERNATIONAL JOURNAL OF ADVANCED MANUFACTURING TECHNOLOGY, vol. 72, no. 5-8, 1 May 2014 (2014-05-01), London, pages 653 - 663, XP055942413, ISSN: 0268-3768, Retrieved from the Internet <URL:https://link.springer.com/content/pdf/10.1007/s00170-014-5690-1.pdf> [retrieved on 20220714], DOI: 10.1007/s00170-014-5690-1

## Description

### Field of the Disclosure

The disclosure relates to a laser welding method for welding materials in industrial applications. In particular, the disclosure relates to a low hazard laser welding method for welding coated metal sheets, for example galvanized steels, coated aluminum or copper sheets, other coated materials as well as mixed joints. The laser welding method described below allows for an improvement of the weld quality and simultaneously for a substantial reduction of the hazard associated with a powerful laser radiation.

### Background of the Disclosure

Laser welding techniques enjoy a growing popularity in a number of industrial applications. For example, one of the promising application fields is welding of car parts manufactured from metal sheets, especially of vehicle bodies. In many of such applications, metal sheets are coated by a protective layer of zinc, chromium or other materials, e.g. in order to better withstand corrosion or in order to adapt characteristics of the metal sheet surface to special requirements of a particular industrial application (e.g. better adhesion).

A problem associated with laser welding of coated materials in overlap joint configuration is an emission of gases, e.g. zinc gases, as the material coatings burn off during welding. This effect, which originates from the difference between the melting temperature of the metal sheet material, e.g. steel (~1500°C), and the vaporizing temperature of the coating material, e.g. zinc (~907°C), results in a significant degradation of the weld between the coated metal sheets, e.g. in porosity inclusions in the weld because the only escape route for gases is through the molten weld pool.

As described in the article "Laser dimpling process parameters selection and optimization using surrogate-driven process capability space" by E. C. Ozkat et.al. (cf. "Optics and Laser Technology", vol. 93 (2017), pages 149-164, significant amount of research work has been conducted to prevent the molten pool from being destroyed by the coating material (e.g. zinc) vapor and several solutions have been proposed which can be classified as:
- "Ventilation": This method is based on degasification of coating material (zinc) vapor from the medium without causing any weld defects either by enlarging molten pool; stabilizing the key hole by employing shielding gas; creating pre-drilled ventilation channels; applying appropriate spacers at the faying surfaces; or adopting a suction method to remove the vapor;
- "Inserting a thin metal foil": This involves adding another material (e.g. Al & Cu) into the faying surface which absorbs coating material (e.g. zinc) vapor or reacts with coating material (e.g. zinc) vapor in such a way that a liquid alloy with a high boiling point is formed;
- "Tandem beams": This approach employs a dual laser beam or a secondary heat source. The first beam applies pre-heating which vaporizes (e.g. zinc) coating and second beam performs actual welding;
- "Controlling keyhole oscillation": The molten pool shape can be controlled based on the pulsed wave mode of laser beam so that more stable keyhole oscillation can be achieved, allowing the coating material (e.g. zinc) vapor to escape during the keyhole closure;
- "Surf-sculpt": This method creates surface features from the base metal by repeated movement of the low power on-focus laser beam in a short distance. These features increase surface area of the material and can be utilized as a spacer between the faying surface in lap joint.

Among the "ventilation" solutions mentioned above, so-called "dimpling" pre-process techniques are used in the industry to overcome the problem with the coating material vapor deterioration of the weld. Dimples are unevenness's on the surface of a metal sheet which work as spacers between the metal sheets in overlap joint configuration and which allow the coating material (e.g. zinc) vapor escape during welding process, thereby preventing weld defects.

One possibility to create dimples on a surface of metal sheets is to use mechanical tools, e.g. as described in the US patent US8166793B2 by Christian Loecker or as manufactured by the Japanese company Conic Co., Ltd (s. https://www.conic.cojp/en/tech/forming_tools/vol2.html). In this case, a hardened mechanical head is hammering on the surface of a metal sheet to produce small dimples. To increase productivity and accuracy of the dimple formation, such mechanical tools can be attached to a robotic arm.

A significant disadvantage of mechanical dimpling pre-processing techniques is that they require expensive mechanical equipment in addition to laser welding equipment. Moreover, mechanical parts of the mechanical dimpling systems shall be often exchanged, in particular replaced by new parts, in order to maintain acceptable quality of the dimples, because mechanical parts hammering on the metal sheet surface ware off.

With the advancement of the laser technology, laser welding systems are under development in which a laser source is used for both dimpling and welding processes. Examples of such systems are described e.g. in the article "Remote laser welding boosts production of new Ford Mustang" by M. Gillon and Ch. Gross published in "Industrial Laser Solutions", vol. 32, No. 4, pp. 28-30 (2017), which can be currently retrieved under the link https://www.industrial-lasers.com/welding/article/16485079/remote-laser-welding-boosts-production-of-new-ford-mustang, in the US patent US10,512,986B2 by Ford Global Technologies or in the article "Laser dimpling process parameters selection and optimization using surrogate-driven process capability space" by E. C. Ozkat et.al. published in "Optics and Laser Technology", vol. 93 (2017), pages 149-164 and which can be currently retrieved under the following link https://www.researchgate.net/publication/314373683_Laser_dimpling_process_parameters_selec tion_and_optimization_using_surrogate-driven_process_capability_space .

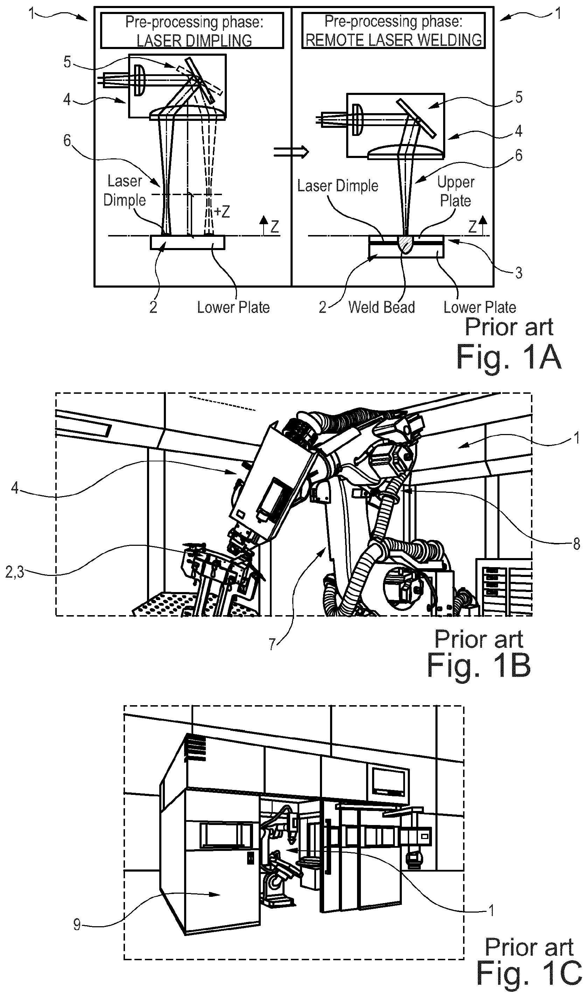

It should be, however, noted that the above-mentioned laser welding systems as well as other laser welding systems known to the applicant, which use a laser source for both dimpling and welding, are designed on the basis of a so-called "remote" or "welding-on-fly" laser system scheme, e.g. as shown in Fig. 1A and Fig. 1B. In such remote laser welding systems, the laser head is located at a distance from the workpiece to be processed, wherein the laser head is usually equipped with a scanning galvo mirror system allowing to steer the laser beam.

An advantage of such remote or welding-on-fly configuration is that it allows a high scanning velocity of the laser beam on the surface of the workpiece and, therefore, high welding speed and productivity. Additionally, a distance between the laser head and the workpiece in such remote systems partially protects the laser head and especially sensitive optics contained therein from fume and flying sparks originating from the weld.

However, such remote laser welding systems have also their disadvantages. One of the important disadvantages of such systems is that they require a special protective environment in order to shield users from the hazardous effects of the powerful laser radiation which is usually used for metal welding. For example, the laser welding system and workpieces needed to be surrounded by a protective cell, e.g. as shown in Fig. 1C, to prevent laser radiation from injuring people operating such remote laser welding systems. Another disadvantage is that such systems also require additional mechanical equipment to press the overlapping metal sheets together during the welding process in order to guarantee a necessary quality of the weld. This additional mechanical equipment makes remote laser welding systems more complex and expensive. Finally, the scanning galvo mirror systems in the laser head used to steer the laser beam is usually quite sensitive, complicated and also expensive.

It should be noted that lasers are classified by both wavelength and maximum output power into four basic safety classes (cf. e.g. https://en.wikipedia.org/wiki/Laser_safety) which categorize them according to their ability to produce damage to people operating them, from safety Class 1 (i.e. no hazard during normal use) to safety Class 4 (i.e. very hazardous for eyes and skin). Lasers used for welding, marking and cutting are generally Class 4 lasers. When operating a Class 4 laser, it is essential to protect yourself and others in the area by using the right safety glasses and placing the laser in a room and/or surrounded by special barriers to protect bystanders from direct contact with the laser beam. Most laser workstations used in manufacturing are built to be integrated with Class 4 lasers and house the laser beam securely in an enclosure or protective cell that is both interlocked and fixed with a laser-safe viewing window. The integration of a high power Class 4 Nd:YAG laser for welding, for example, into a Class 1 enclosure or protective cell creates a safe, Class 1 environment.

Therefore, a need exists for a laser method adapted to weld overlapping coated metal sheets which overcomes the above-mentioned disadvantages. In particular, it is desirable to provide a simple but robust laser welding method which on the one side guarantees a safe or at least low hazard working environment, preferably the above-mentioned Class 1 laser safety environment, but on the other side also allowing for precise and reliable production of high-quality welds between coated metal sheets.

EP 2 588 268 A1 describes a method for laser welding first and second components including moving a laser beam across a portion of a surface of the first component at a speed sufficient to generate protuberances on the surface of the first component by means of a humping effect, juxtaposing said first and second components such that opposed surfaces of the first and second components are separated by said protuberances on the surface of the first component, and laser welding said first and second components by scanning the laser beam in a region in which said surfaces are separated by said protuberances. The height of the protuberances can be controlled by controlling a scanning speed of the laser beam.

EP 3 357 628 A1 teaches a hand maneuverable laser welding gun for joining metal pieces with a weld of predetermined strength, comprising a laser source, at least one arm provided with an interior which forms a tunnel configured to guide the laser light towards a welding zone to produce the weld, a light trap located on the back side of the welding zone, a light sensor coupled to the trap and operative to detect light, which propagates through the welding zone and output a signal upon detecting the light, and a controller to adjust the power of the beam to produce the weld of the predetermined strength.

Further relevant prior art is disclosed, for example, in US 2011/278 265 A1, US 2015/306 708 A1, and Colombo Daniele et al. "Laser dimpling and remote welding of zinc-coated steels for automotive applications".

### SUMMARY OF THE DISCLOSURE

These needs are satisfied by a laser welding method as disclosed and claimed in the present application.

In particular, the inventive method refers to laser welding a first metal sheet and a second metal sheet, which overlaps the first metal sheet, wherein the first metal sheet and/or the second metal sheet is coated with a protective coating layer.

According to the invention, the method comprises the following steps:
- pre-processing the first metal sheet by means of a laser beam, wherein the laser beam is delivered to a surface of the first metal sheet through a hollow pressure piece of a welding laser head and wherein characteristics of the laser beam are adapted to create multiple spaced apart dimples on the surface of the first metal sheet, wherein the spaced apart dimples on the surface of the first metal sheet preferably have a regular pattern;
- positioning the second metal sheet on the pre-treated surface of the first metal sheet;
- applying mechanical force by means of the hollow pressure piece of the laser head to the overlapping first and the second metal sheets;
- welding the first and the second metal sheets by means of the laser beam, wherein the laser beam is delivered to a surface of the second metal sheet through the hollow pressure piece of the laser head and wherein characteristics of the laser beam are adapted to create a seam weld between the first and the second metal sheets.

As the hollow pressure piece of the laser head is adapted to apply mechanical force, preferably in the range of 0,3 - 3 kN, and even more preferably in the range of 0,3 - 1 kN for a picker laser head configuration or in the range of 0,8 - 3 kN for a C-gun laser head configuration, onto the surface of the first metal sheet and/or the second metal sheet which is sufficient to ensure that the laser welding system (10) operates in a laser safety Class 1.

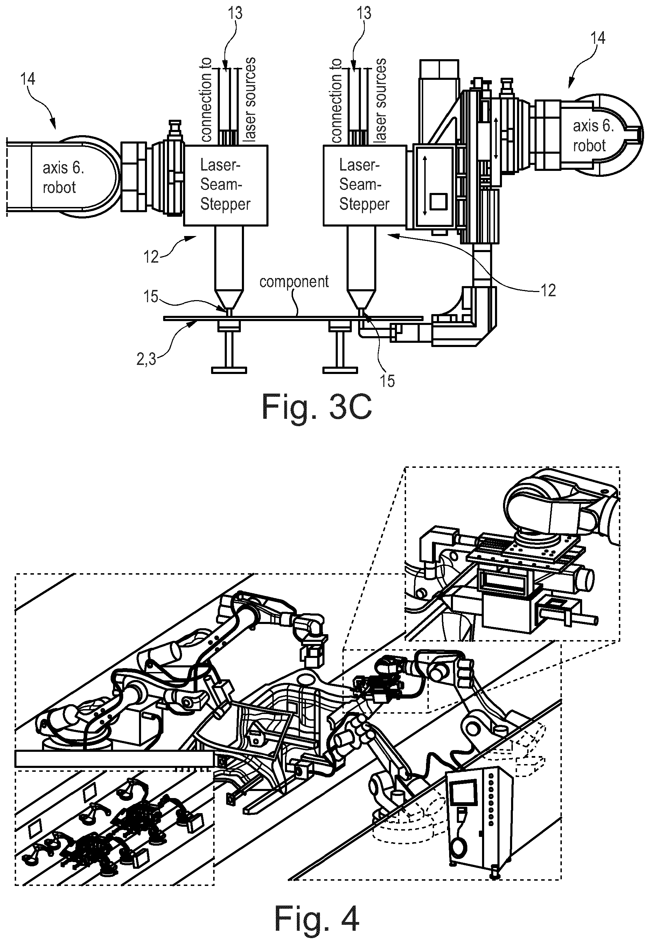

Although the laser welding method according to the present invention is basically slower than the above-mentioned remote or welding-on-fly laser welding process, the applicant arrived at a conclusion that advantages of the disclosed method would, nevertheless, overcompensate disadvantages related to the processing speed. For example, the welding method and systems according to the present invention are especially suitable for an automated conveyor line assembly manufacturing, especially involving a simultaneous use of multiple robotic arms, as shown in Fig. 4. On the contrary, a remote welding equipment with multiple robotic arms would be impractical for a conveyor line assembly manufacturing because it requires large protective cabins, e.g. as shown in Fig. 1C and even bigger, in order to protect people from hazardous laser radiation.

According to the present invention, the power of the laser beam during the pre-processing dimpling step on the first metal is lowered by a factor between 2 and 5, comparing to power of the laser beam during the welding of the first and second metal sheets, which preferably ranges between 2 - 4 kW, and in especially preferable case between 2,5 - 3,5 kW. The applicant found out that the power of the laser beam in the range of e.g. 600 - 1200 W, and in especially preferable case between 800 - 1000 W, would be better suitable for creating e.g. regular patterns of multiple linear or wobbled spaced apart dimples, especially in terms of the dimple quality and dimple shape/profile. Moreover, the reduction of the laser power during the pre-processing dimpling step results in a lower energy consumption and production savings.

According to another aspect of the present invention, it is preferred that the movement of the laser beam on the surface of the first metal sheet during the pre-processing dimpling step as well as on the surface of the second metal sheet during the welding step of the first and second metal sheets is mechanically controlled such that the laser beam doesn't touch inner walls of the hollow pressure piece of the laser head while simultaneously creating a (preferably linear or wobbled) pattern of multiple spaced apart dimples.

In a preferred embodiment of the inventive laser welding method the movement of the laser beam is implemented e.g. by a mechanical displacement of an end piece of a laser beam delivery cable and optics (e.g. focusing optics) which are eventually attached to the end piece of the laser beam delivery cable. For example, the end piece of a laser beam delivery cable and attached optics can be mechanically displaced along the X-axis (preferably with a speed between 5-100 mm/s, more preferably with a speed of ca. 80 mm/s), which located parallel to the longitudinal opening of the hollow pressure piece, and eventually also the perpendicular Y-axis by means of a single micromotor or multiple micromotors such that the laser beam can be mechanically moved parallel to the surface of a metal sheet to be processed. In order to implement a wobbling function, e.g. an eccentric part can be used in addition to the mechanical displacement along the X-axis. Such mechanical control of the laser beam movement is quite simple and doesn't require sensible and rather expensive optical parts (e.g. optical scanners) which are usually implemented in the remote welding applications.

In a preferred embodiment of the present invention, the laser beam used for the pre-processing dimpling step as well as for the welding step is in a continuous wave (CW) mode or quasi-continuous wave (QCW) mode.

In yet another preferred embodiment of the present invention, the laser beam during the pre-processing of the first metal sheet is modulated to produce a number of cutoff meander-like or sinusoidal-like laser light pulses, wherein each laser light pulse produces a dimple on the surface of the first metal sheet. In a preferred embodiment of the present invention, a duration of the laser light pulse can be chosen between 15-25 milliseconds (ms), preferably in the area of 20 ms. A duration between neighboring laser light pulses can variate as well. For example, in one preferred embodiment, a duration of laser pulses used for dimpling and a duration between neighboring laser light pulses was chosen at ca. 20 ms both. Together with the above-described mechanical displacement of the laser beam, such technique allows for a simple and reliable method to produce patterns of regular spaced apart dimples with the desired characteristics, especially with a desired shape and profile. For example, in a preferred embodiment of the present invention, the height of the dimples is approximately 0,1-0,2 mm, especially 0,15-0,16 mm, which appears to be an optimal dimple height for welding of Zi- or Zi-alloy coated metal (e.g. steel) sheets. This optimal shape and height of dimples can, however, deviate for welding other materials and can be either lower or higher than said 0,1-0,2 mm, and especially than 0,15-0,16 mm.

It should be also mentioned that the method according to the present invention can be used not only in conjunction with welding coated metal sheets, especially Zi- or Zi alloy based coated steel sheets, but also for other industrial applications. For example, the pre-processing dimpling step according to the present invention can be used in order to produce dimples on the surface of the first metal sheet, wherein the produced dimples allow to accommodate e.g. a layer of an adhesive substance on the surface of the first metal sheet. In this scenario, a profile (especially a height) of the dimples is adapted such that the layer of an adhesive substance is substantially not squeezed out when the second metal sheet is placed on the first metal sheet with the adhesive layer and when both sheets are pressed against each other (e.g. for a welding purposes or in order to allow the adhesive substance to better join the both sheets). Correspondently, an optimal dimple shape and especially height can variate depending on the industrial application.

According to another aspect of the present invention, a laser welding method further comprises steps of:
- collecting light which is back-reflected into the fiber core of a laser beam delivery cable;
- comparing collected back-reflected light with a predetermined pattern; and
- generating an alarm signal or a control signal to adjust characteristics of the laser beam if the collected back-reflected light deviates from a predetermined pattern by an amount exceeding a predetermined threshold.
Such technique allows for a simple and reliable control mechanism to identify a malfunction of the laser welding system both during the pre-processing dimpling step as well as during the subsequent welding step.

It should be noted that the described method is especially suitable for welding of metal sheets coated by a protective layer containing e.g. an anticorrosion layer of zinc (Zn), zinc (Zn) based coatings as well as some other coating materials, which are often used specifically in the automotive industry for manufacturing car bodies. However, the present invention is not limited to the above-mentioned coated metal sheets but can be also used with other coatings and in other industries than car manufacturing. Basically, the method according to the present invention can be used in conjunction with any type of coating materials which vaporizing temperature is lower than melting temperature of the metal sheet material. For example, if the metal sheet is made of steel which melting temperature is ~ 1500°C, corresponding coating materials could be e.g. zinc (vaporizing temperature ~ 907°C) or other materials like magnesium (Mg), potassium (K), sodium (Na) and corresponding alloys as well as usually flammable carbon compounds, organic coatings (e.g. paints, polymers), powder coatings, oils, adhesive materials or e.g. dry lubricants with a vaporizing temperature lower than the melting temperature of the metal sheet (e.g. steel).

### BRIEF DESCRIPTION OF THE DRAWINGS

The above and other aspects and features will become more readily apparent in conjunction with the following drawings, in which a laser system, not covered by the claims, is shown:
Fig. 1A is a sequence of the pre-processing dimpling and subsequent welding steps in a prior art remote laser welding system for welding of coated metal sheets;
Fig. 1B is an example of the prior art remote laser processing system;
Fig. 1C is an example of the protective cabin for a prior art remote laser processing system;
Fig. 2A is a view of an embodiment of a laser welding system configured with a robotic arm and a picker laser head;
Fig. 2B is a view of another embodiment of the laser welding system configured with a robotic arm and a C-gun laser head;
Fig. 3A is a detailed view of the picker laser head;
Fig. 3B is a detailed view of the C-gun laser head;
Fig. 3C is a side schematic view of the laser welding system equipped with a picker (left) and a C-gun (right) laser head;
Fig. 4 is a view of the laser welding system in the context of automated conveyor line assembly of car bodies;
Fig. 5A is a detailed view of the picker laser head;
Fig. 5B is another detailed view of the picker laser head;
Fig. 6A is a detailed side view of the picker laser head with open body housing;
Fig. 6B is a detailed side view of the picker laser head with closed body housing;
Fig. 6C is a detailed view of the experimental set-up with a picker laser head after the completion of the pre-processing dimpling step;
Fig. 7A is an example of a liner dimple pattern;
Fig. 7B is an example of a wobbled dimple pattern;
Fig. 7C is an example of a dimple produced with the system;
Fig. 7D is a height profile of the dimple shown in Fig. 7C measured with a 3D-microscope;
Fig. 8A is a detailed view of the experimental set-up with a picker laser head during the welding of the first and the second metal sheets;
Fig. 8B shows the weld produced with the experimental set-up of Fig. 8A;
Fig. 8C shows the cross-section of the weld of Fig. 8B;
Fig. 9 is a side view of a laser source block with open body housing;
Fig. 10 is an example of comparison for a signal generated from the back-reflected light with a pre-determined signal pattern;

### SPECIFIC DESCRIPTION

Reference will now be made in detail to the disclosed inventive concepts. Wherever possible, same or similar reference numerals are used in the drawings and the description to refer to the same or like parts or steps. The drawings are in simplified form being far from precise scale.

Fig. 1 illustrates a sequence of the pre-processing dimpling and subsequent welding steps in a so-called remote laser welding system 1 for welding of coated metal sheets 2, 3 which is known from the prior art. In such remote laser welding systems 1, the laser head 4 is located at a distance from the workpiece 2, 3 which shall be processed, wherein the laser head 4 is usually equipped with a scanning galvo mirror system 5 allowing to steer the laser beam 6.

An advantage of the remote or welding-on-fly configuration is that it enables a high scanning velocity of the laser beam 6 on the surface of the workpiece 2, 3 and therefore also high welding speed and productivity. Additionally, a distance between the laser head 4 and the workpiece 2,3 in such remote systems 1 protects the laser head 4 and especially sensitive optics contained therein from fume, soot and flying sparks originating from the weld.

The laser head 4 in a remote laser welding system 1 can be also attached to a robotic arm 7 for the purposes of welding automation as shown in Fig. 1B. In such a configuration a laser beam 6 is delivered from the laser source to a laser head 4 of the laser welding system by means of a laser beam delivery cable 8. An essential disadvantage of such remote laser welding configuration can be clearly recognized from Fig. 1C showing a typical example of a prior art industrial remote laser welding system 1. As can be seen in Fig. 1C, the remote laser welding system 1 shall be surrounded by a protective cabin 9 to protect people operating such remote systems 1 from hazardous laser radiation. This makes the remote laser welding systems 1 not only more complicated and expensive but also makes them unsuitable or disadvantages for e.g. an automated conveyor line assembly manufacturing as shown in Fig. 4.

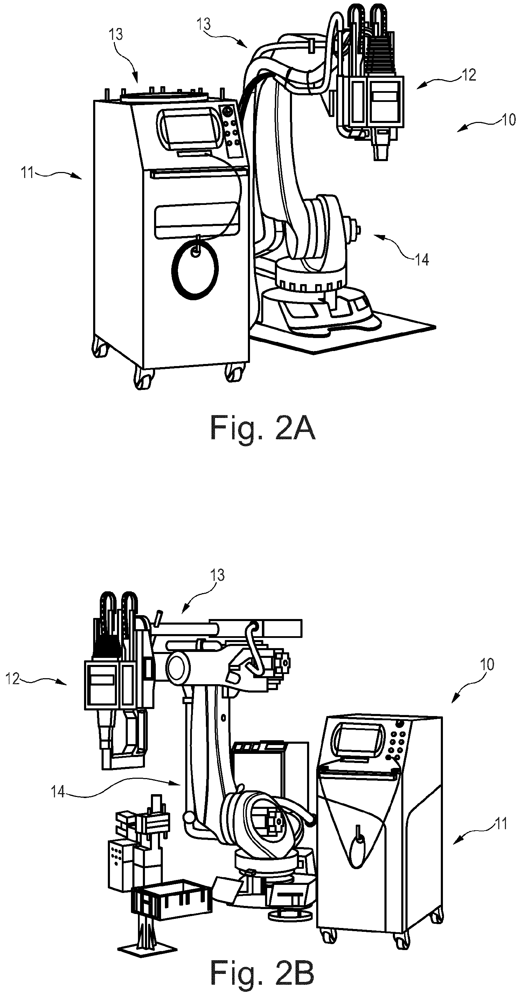

The present invention discloses a laser welding method which solves the above-mentioned and other problems associated with a remote laser welding system 1. Fig. 2A and Fig. 2B show preferred embodiments of the laser welding systems 10, not covered by the appended claims. The laser welding system comprises a laser source 11 adapted to produce a continuous wave (CW) or a quasi-continuous wave (QCW) laser beam, and laser head 12. The laser radiation is delivered from the laser source 11 to the laser head 12 by means of a laser beam delivery cable 13. For many industrial applications, it is especially advantageous to use robotic arms 14 for purposes of processing automation as shown in Fig. 2A and 2B.

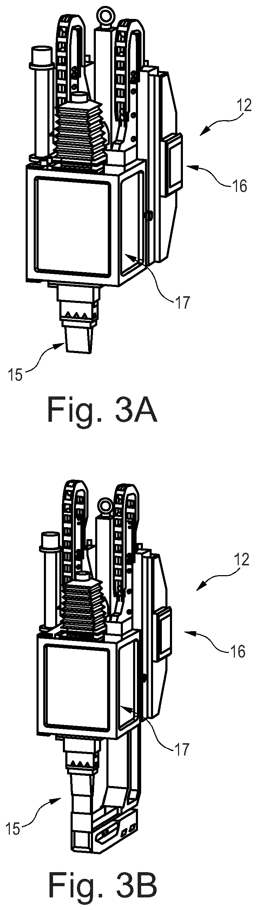

According to the invention, the laser head 12 is equipped with a hollow pressure piece 15 in booth a so-called "picker" configuration shown in Fig. 3A and a so-called "C-gun" configuration shown in Fig. 3B. The laser head 12 and the hollow pressure piece 15 are adapted to apply a clamping force preferably in the range of 0,3 - 3 kN, and even more preferably in the range of 0,3 - 1 kN for the picker laser head (12) configuration or in the range of 0,8 - 3 kN for the C-gun laser head (12) configuration. This is achieved by means of a special mechanical assembly 16 or alternatively, e.g. in case of the picker configuration, by means of the robotic arm 14 itself. The inner parts of the laser head are protected by a housing 17. It should be noted that for both the "picker" (Fig. 3A) and "C-gun" (Fig. 3B) configuration a term "laser seam stepper" or abbreviated LSS can also be used.

Fig. 3C shows a side schematic view of the laser welding system 10 equipped with a picker (left) and a C-gun (right) laser head 12. As can be seen, the laser head 12 can apply mechanical force by means of the hollow pressure piece 15 onto the surface of the of the metal sheet 2, 3 during the pre-processing dimpling step on the first metal sheet 2 or during the welding step of the overlapping first and second metal sheets 2, 3. Since the laser beam 6 is delivered to the surface of the metal sheet 2, 3 through the hollow pressure piece 15 of the laser head 12, the hollow pressure piece 15 shields the external environment from hazardous laser radiation which can escape the processing zone during the dimpling or welding steps. The mechanical pressure or clamping force applied by the hollow pressure piece 15 shall be sufficient enough in this case. Preferably, it can range between 0,3 kN and 3 kN. However, the applicant found out that a clamping force between 0,3 kN and 1 kN would be sufficient for many industrial applications, e.g. for welding of car body parts, which involves a picker laser head 12 configuration. However, a clamping force between 0,8 kN and 3 kN appears to be better suitable for the C-gun laser head 12 configuration. In over words, the inventive laser welding system can be qualified as a Class 1 laser device which makes this system especially suitable for automated conveyor line assembly applications, e.g. as shown in Fig. 4. As already noted, the use of the remote laser welding systems 1 would be quite disadvantages for such applications because the user of such remote systems shall install a very large protective cabin around the robotic arms shown in Fig. 4 to protect personnel from hazardous radiation which may escape the processing zone during the pre-processing dimpling step as well as during the welding step.

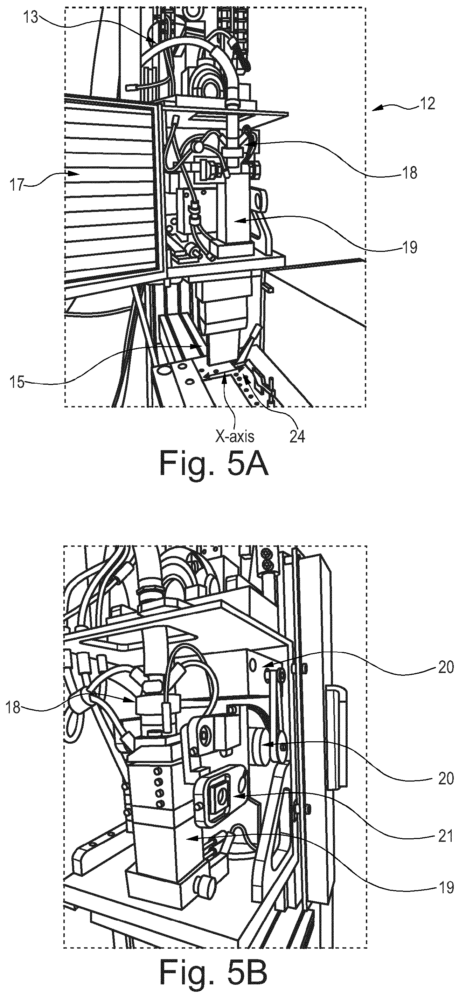

Fig. 5A and 5B are detailed views of the picker laser head 12 with the open housing 17. As can be seen, the laser welding system 10 implements a simple, reliable and robust mechanical scheme steer the laser beam 6 on the surfaces of the first and second metal sheets 2, 3. In particular, an end piece 18 of the laser beam delivery cable 13 and optics 19 (e.g. focusing optics) attached to the end piece 18 of the laser beam delivery cable 13 are mechanically displace by means of mechanical components 20 within the laser head 12 such that the laser beam delivered to the surface of the metal sheets 2, 3 doesn't touch inner walls of the hollow pressure piece 15 of the welding laser head 12 during the steps of pre-processing the first metal sheet 2 and welding the first and second metal sheets 2, 3. The mechanical components 20 may include e.g. micromotors to effect a linear displacement of the end piece 18 of the laser beam delivery cable 13 and optics 19 along an X- and/or Y-axis parallel to the surface of the workpiece 2, 3 to be (pre-)processed. In order to implement a wobbling function, e.g. an eccentric part 21 can be used in addition to the mechanical displacement along the X-axis (preferably with a speed between 5-100 mm/s, and even more preferably with a speed of ca. 80 mm/s) located parallel to the longitudinal opening 24 of the hollow pressure piece 15.

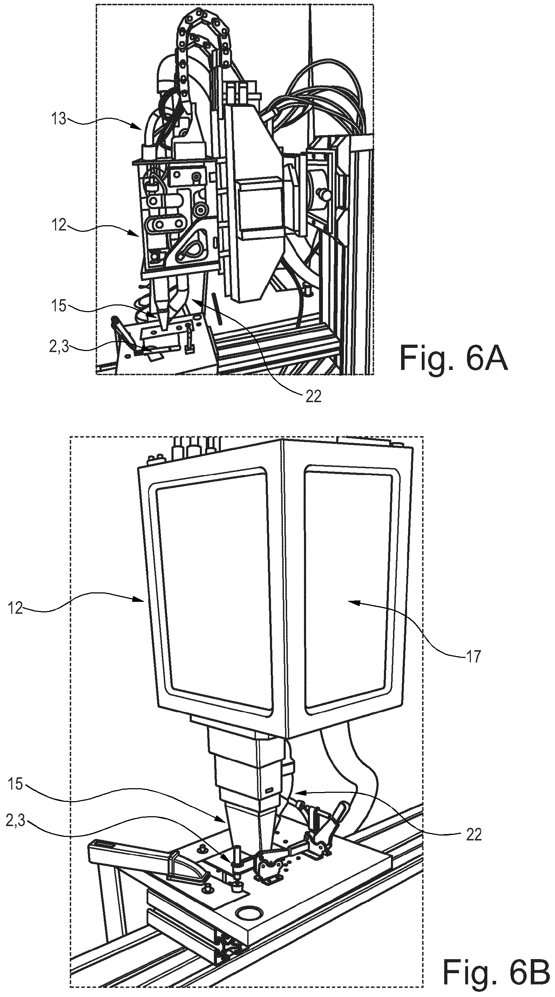

Fig. 6A and 6B show detailed side views of the picker laser head 12 with open and closed body housing 17 correspondently. As can be seen, the system 10 allows for a very simple integration of a suction device 22 (e.g. a suction nozzle and suction sleeve) is connected to the hollow pressure piece 15 of the laser head 12, wherein the suction device 22 is adapted to evacuate soot, fume and other unwanted products of the pre-processing dimpling step or the welding step from the surface of the workpiece 2, 3.

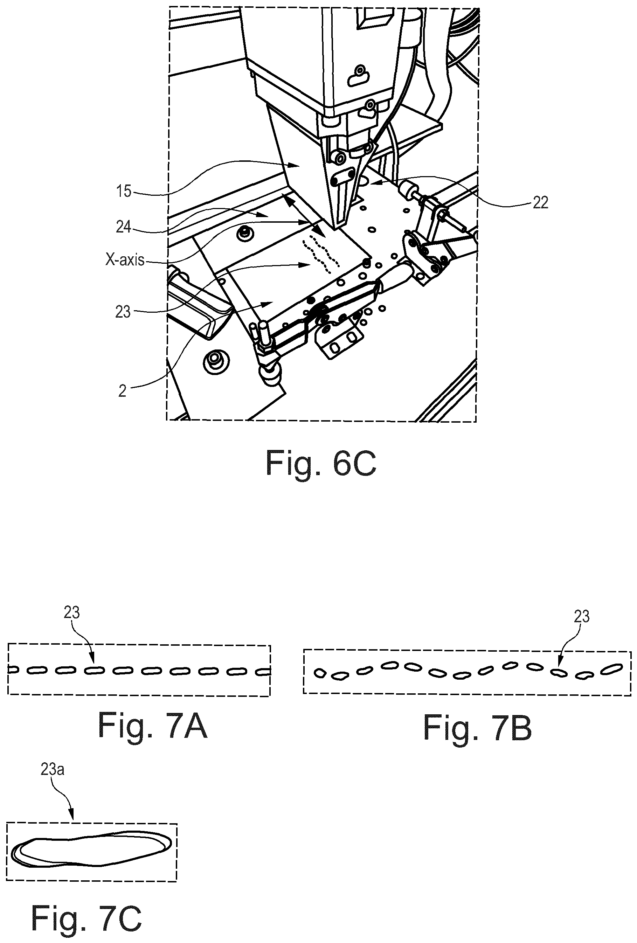

Fig. 6C shows an experimental set-up with a picker laser head 12 after the completion of the pre-processing dimpling step. As can be seen, a regular pattern (in this case a wobbled pattern) of the spaced apart dimples 23 has been produced on the surface of the first metal sheet 2 after the pre-processing (i.e. dimpling) step. The quality of the dimples produced in the laser welding system 10 can be even better seen in Fig. 7A (liner dimple pattern) and Fig. 7B (wobbled dimple pattern).

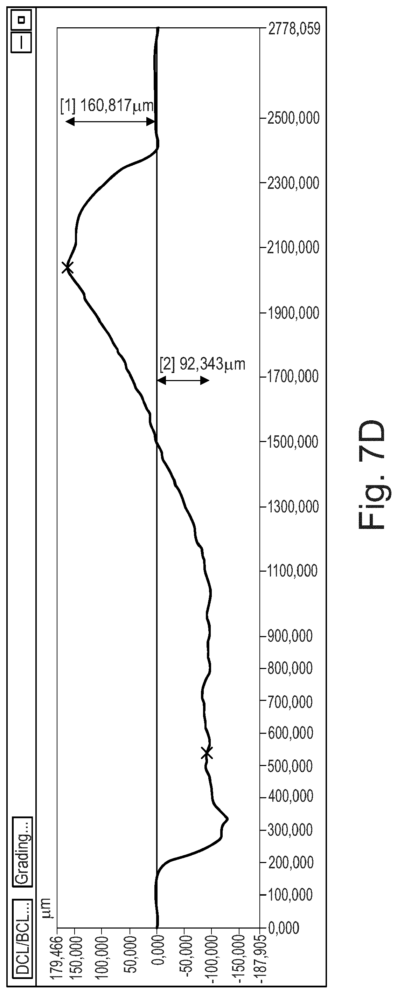

Fig. 7C is a larger image of a dimple produced with the system 10 and Fig. 7D is a height profile of the dimple shown in Fig. 7C measured with a 3D-microscope. As can be seen from Fig. 7D, the height of the dimple is approximately 0,15-0,16 mm which appears to be an optimal high e.g. for welding applications involving welding of e.g. Zi- or Zi-alloy coated metal sheets, especially steel sheets. It should be noted that in order to create such dimples, the power of the laser beam during the pre-processing of the first metal sheet is lowered by a factor between 2 and 5 comparing to power of the laser beam during the welding of the first and second metal sheets which usually ranges between 2 kW and 4 kW, and in especially preferable case between 2,5 - 3,5 kW. The applicant found out that a "dimpling" laser power between 600 - 1200 W, especially in the area around 800-1000 W, depending on the fiber core diameter which can usually variate between 100-200 µm, preferably around ca. 150 µm, and material to be pre-processed, would be beneficial for many industrial applications involving the laser welding system 10. The applicant found out that without lowering the power of the laser beam during the pre-processing dimpling step as described above, the quality of dimples, in particular their shape and profile, would be insufficient for many industrial welding applications implemented by means of the described laser welding system and method.

In a preferred embodiment of the present invention, a duration of the laser light pulse was selected between 15-25 milliseconds (ms), preferably in the area of 20 ms. A duration between neighboring laser light pulses can also variate. For example, a duration of laser pulses used for dimpling and a duration between neighboring laser light pulses can be selected at ca. 20 ms.

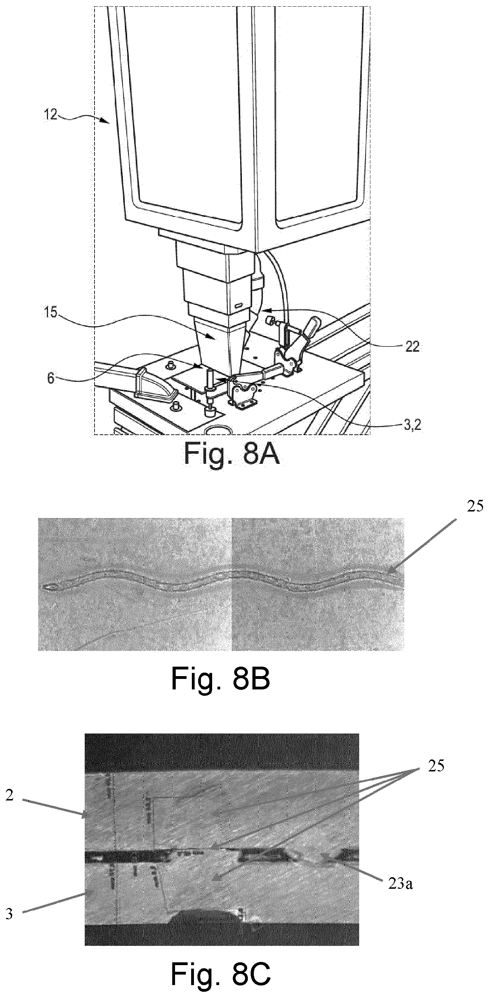

Fig. 8A is a detailed view of the experimental set-up with a picker laser head during the welding of the first and the second metal sheets. The hollow pressure piece 15 of the laser head 12 applies a mechanical pressure (clamping force) onto the surface of the second pressure piece 3 which overlaps the first metal sheet 2. The clamping force exercised by the hollow pressure piece is selected such that the laser beam 6 can't significantly escape the welding zone thus securing that the system can operate in the above-mentioned Class 1 laser safety. The applicant found out that the mechanical (clamping) force in the range of 0,3-3 kN would be generally sufficient for that purpose and that optimal results could be achieved in the range of 0,3-1 kN for a picker laser head 12 configuration or in the range of 0,8-3 kN for a C-gun laser head 12 configuration. For example, no protective glasses have been required in the experimental set-up shown in Fig. 8A.

The result of the welding step according to the experimental set-up of Fig. 8A is demonstrated in Fig. 8B. Fig. 8B shows a good quality weld 25, in this case a seam weld, between the first and second metal sheets 2, 3.

Fig. 8C shows the cross-section of the weld of Fig. 8B. As can be seen, dimples 23a on the surface of the first metal sheet 2 produced during the pre-processing dimpling step guarantee that the (e.g. Zi or Zi-alloy) coating vapor can escape the welding zone thus enabling a good quality of the weld 25 between the first and second metal sheets 2, 3.

The disclosed high power laser welding system is also adapted to monitor and automatically control possible operational malfunctions of the system. For these purposes, the welding system is equipped with a monitoring assembly which receives and analyses the radiation back-reflected from a workpiece (here coated metal sheets 2, 3) during the pre-processing dimpling step or during the welding step, for example as described in the European patent application EP3689530A1 owned by the same applicant.

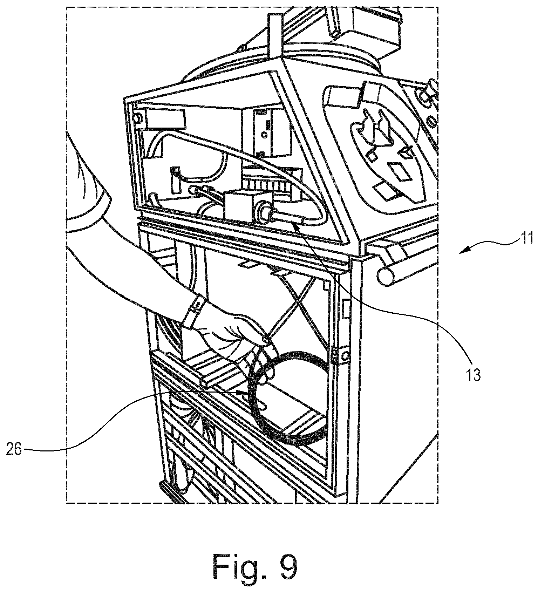

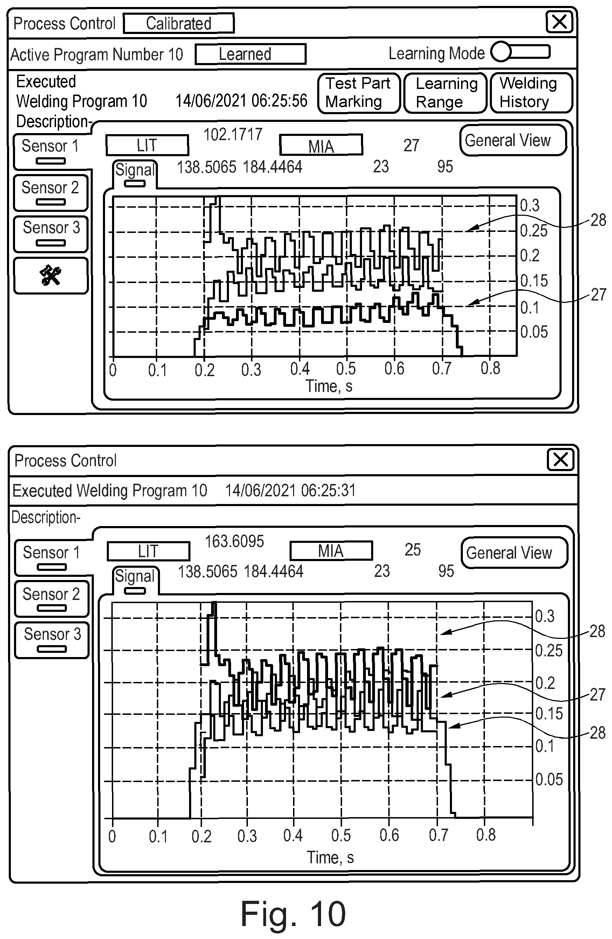

It is known that the radiation which is reflected from the workpiece may travel backwards along the light path through the laser head, the delivery fiber, and eventually a combiner, towards the laser module or modules as described e.g. in the above-mentioned European application EP3689530A1. This back-reflected light may be stripped e.g. by means of separate optical fibers 26 as shown in Fig. 9 and directed for the analysis. On the basis of such analysis, e.g. a spectrum analysis of the back-reflected radiation, an alarm signal or a control signal 27 can be generated and then compared with a pre-determined signal pattern 28 as shown in Fig. 10. Should the signal 27, which is generated on the basis of the back-reflected light analysis, lay outside of a pre-determined threshold 28 then it can be used as an indication that something in the welding system 10 is going wrong and an alarm signal, automatic adjustment of the system parameters or even a system shut down can be triggered.

Although there has been illustrated and described in specific detail and structure of operations, it is understood that the same were for purposes of illustration and that changes and modifications may be made readily therein by those skilled in the art without departing of the scope of this disclosure, which is defined by the appended claims.

### List of reference signs:

- 1.: remote laser welding system
- 2.: first metal sheet
- 3.: second metal sheet
- 4.: laser head of the remote laser welding system
- 5.: scanning galvo mirror system
- 6.: laser beam
- 7.: robotic arm
- 8.: laser beam delivery cable
- 9.: protective cabin of the remote laser welding system
- 10.: laser welding system
- 11.: laser source
- 12.: laser head
- 13.: laser beam delivery cable
- 14.: robotic arm
- 15.: hollow pressure piece of the laser head
- 16.: mechanical assembly to produce clamping force
- 17.: housing of the laser head
- 18.: end piece of the laser beam delivery cable
- 19.: optics attached to the end piece of the laser beam delivery cable
- 20.: mechanical components to displace the end piece of the laser beam delivery cable and optics
- 21.: eccentric part to implement wobbling function
- 22.: suction device
- 23.: linear or wobbled dimple pattern on the surface of the first metal sheet
- 23a: dimple on the surface of the first metal sheet
- 24.: longitudinal opening of the hollow pressure piece
- 25.: linear or wobbled (seam) weld between the first and the second metal sheets
- 26.: optical fibers for radiation back-reflected from the workpiece
- 27.: control signal generated from the analysis of the back-reflected radiation
- 28.: pre-determined signal pattern

## Claims

1. A method of laser welding a first metal sheet (2) and a second metal sheet (3), which overlaps the first metal sheet (2), wherein the first metal sheet (2) and/or the second metal sheet (3) is coated with a protective coating layer, the method comprising:
- pre-processing the first metal sheet (2) by means of a laser beam (6), wherein the laser beam (6) is delivered to a surface of the first metal sheet (2) through a hollow pressure piece (15) of a laser head (12) and wherein characteristics of the laser beam (6) are adapted to create multiple spaced apart dimples (23, 23a) on the surface of the first metal sheet (2);
- positioning the second metal sheet (3) on the pre-treated surface of the first metal sheet (2);
- applying mechanical force, preferably in the range of 0,3-3 kN, and more preferably in the range of 0,3-1 kN for a picker laser head (12) configuration or in the range of 0,8-3 kN for a C-gun laser head (12) configuration, by means of the hollow pressure piece (15) of the laser head (12) to the overlapping first and the second metal sheets (2, 3);
- welding the first and the second metal sheets (2, 3) by means of the laser beam (6), wherein the laser beam (6) is delivered to a surface of the second metal sheet (3) through the hollow pressure piece (15) of the laser head (12) and wherein characteristics of the laser beam (6) are adapted to create a weld (25), preferably a seam weld (25), between the first and the second metal sheets (2, 3),
wherein power of the laser beam (6) during the pre-processing of the first metal sheet (2) is lowered by a factor between 2 and 5 comparing to power of the laser beam (6) during the welding of the first and second metal sheets (2, 3), preferably from 2 - 4 kW to 600 - 1200 W, and in especially preferable case from 2,5 - 3,5 kW for welding to 800-1000 W for dimpling.

2. The laser welding method according to claim 1, wherein movement of the laser beam (6) during the pre-processing of the first metal sheet (2) is mechanically controlled such that the laser beam doesn't touch inner walls of the hollow pressure piece (15) of the laser head (12) while simultaneously creating a linear or wobbled pattern (23) of multiple spaced apart dimples (23a).

3. The laser welding method according to claim 2, wherein the movement of the laser beam (6) is implemented by a mechanical displacement of an end piece (18) of a laser beam delivery cable (13) and optics (19) attached to the end piece (18) of the laser beam delivery cable (13).

4. The laser welding method according to one of the preceding claims, wherein the laser beam (6) is in a continuous wave (CW) mode or quasi-continuous wave (QCW) mode.

5. The laser welding method according to one of the preceding claims, wherein the laser beam (6) during the pre-processing of the first metal sheet (2) is modulated to produce a number of cutoff meander-like or sinusoidal-like laser light pulses, wherein each laser light pulse produces a dimple (23a) on the surface of the first metal sheet (2), and preferably wherein the duration of the laser light pulse is chosen between 15-25 ms, preferably at ca. 20 ms.

6. The laser welding method according to one of the preceding claims, further comprising:
- collecting light which is back-reflected into the fiber core of a laser beam delivery cable (13);
- generating a control signal (27) based on the analysis of the collected back-reflected light with a predetermined signal pattern (28); and
- adjusting characteristics of the laser beam (6) if the control signal (27) based on the analysis of the collected back-reflected light deviates from a predetermined signal pattern (28) by an amount exceeding a predetermined threshold.

7. The laser welding method according to one of the preceding claims, wherein the protective coating layer contains a layer of zinc (Zn), zinc (Zn) alloy, based coating or other coating materials with a vaporizing temperature lower than the melting temperature of the metal sheet.

## Patentansprüche

1. Verfahren zum Laserschweißen eines ersten Blechs (2) und eines zweiten Blechs (3), das das erste Blech (2) überlappt, wobei das erste Blech (2) und/oder das zweite Blech (3) mit einer Schutzbeschichtungsschicht beschichtet sind, wobei das Verfahren umfasst:
- Vorverarbeiten des ersten Blechs (2) mittels eines Laserstrahls (6), wobei der Laserstrahl (6) durch ein hohles Druckstück (15) eines Laserkopfs (12) einer Oberfläche des ersten Blechs (2) zugeführt wird und wobei Kenngrößen des Laserstrahls (6) dafür ausgelegt sind, auf der Oberfläche des ersten Blechs (2) mehrere beabstandete Vertiefungen (23, 23a) zu erzeugen;
- Positionieren des zweiten Blechs (3) auf der vorbehandelten Oberfläche des ersten Blechs (2);
- Ausüben einer mechanischen Kraft, vorzugsweise in dem Bereich von 0,3-3 kN und bevorzugter in dem Bereich von 0,3-1 kN für eine Picker-Laserkopfkonfiguration (12) oder in dem Bereich von 0,8-3 kN für eine C-Gun-Laserkopfkonfiguration (12), mittels des hohlen Druckstücks (15) des Laserkopfs (12) auf das erste und das zweite Blech (2, 3), die überlappen;
- Schweißen des ersten und des zweiten Blechs (2, 3) mittels des Laserstrahls (6), wobei der Laserstrahl (6) durch das hohle Druckstück (15) des Laserkopfs (12) einer Oberfläche des zweiten Blechs (3) zugeführt wird und wobei die Kenngrößen des Laserstrahls (6) dafür ausgelegt sind, zwischen dem ersten und dem zweiten Blech (2, 3) eine Schweißstelle (25), vorzugsweise eine Schweißnaht (25), zu erzeugen,
wobei die Leistung des Laserstrahls (6) während des Vorverarbeitens des ersten Blechs (2) im Vergleich zu der Leistung des Laserstrahls (6) während des Schweißens des ersten und des zweiten Blechs (2, 3), vorzugsweise von 2 bis 4 kW bis 600-1200 W, und in einem besonders bevorzugten Fall von 2,5-3,5 kW für das Schweißen bis 800-1000 W für das Erzeugen der Vertiefungen, um einen Faktor zwischen 2 und 5 verringert ist.

2. Laserschweißverfahren nach Anspruch 1, wobei die Bewegung des Laserstrahls (6) während der Vorverarbeitung des ersten Blechs (2) in der Weise mechanisch gesteuert wird, dass der Laserstrahl die Innenwände des hohlen Druckstücks (15) des Laserkopfs (12) nicht berührt, während er gleichzeitig ein lineares oder gewobbeltes Muster (23) der mehreren beabstandeten Vertiefungen (23a) erzeugt.

3. Laserschweißverfahren nach Anspruch 2, wobei die Bewegung des Laserstrahls (6) durch eine mechanische Verlagerung eines Endstücks (18) eines Laserstrahl-Zufuhrkabels (13) und einer an dem Endstück (18) des Laserstrahl-Zufuhrkabels (13) angebrachten Optik (19) implementiert wird.

4. Laserschweißverfahren nach einem der vorhergehenden Ansprüche, wobei der Laserstrahl (6) in einer Dauerstrich-Betriebsart (CW-Betriebsart) oder in einer Quasi-Dauerstrich-Betriebsart (QCW-Betriebsart) ist.

5. Laserschweißverfahren nach einem der vorhergehenden Ansprüche, wobei der Laserstrahl (6) während des Vorerarbeitens des ersten Blechs (2) moduliert wird, um eine Anzahl abgeschnittener mäanderartiger oder sinusartiger Laserlichtimpulse herzustellen, wobei jeder Laserlichtimpuls auf der Oberfläche des ersten Blechs (2) eine Vertiefung (23a) herstellt und wobei die Dauer des Laserlichtimpulses zwischen 15-25 ms, vorzugsweise bei ca. 20 ms, gewählt wird.

6. Laserschweißverfahren nach einem der vorhergehenden Ansprüche, das ferner umfasst:
- Sammeln von Licht, das in den Faserkern eines Laserstrahl-Zufuhrkabels (13) zurückreflektiert wird;
- Erzeugen eines Steuersignals (27) auf der Grundlage der Analyse des gesammelten zurückreflektierten Lichts mit einem vorgegebenen Signalmuster (28); und
- Anpassen von Kenngrößen des Laserstrahls (6), falls das Steuersignal (27) auf der Grundlage der Analyse des gesammelten zurückreflektierten Lichts um einen Betrag, der einen vorgegebenen Schwellenwert übersteigt, von einem vorgegebenen Signalmuster (28) abweicht.

7. Laserschweißverfahren nach einem der vorhergehenden Ansprüche, wobei die Schutzbeschichtungsschicht eine Schicht einer Beschichtung auf Zinkgrundlage (Zn-Grundlage), auf einer Zink-Legierungs-Grundlage (Zn-Legierungs-Grundlage) oder anderer Beschichtungsmaterialien mit einer niedrigeren Verdampfungstemperatur als der Schmelztemperatur des Blechs enthält.

## Revendications

1. Procédé de soudage laser d'une première tôle métallique (2) et d'une deuxième tôle métallique (3) qui chevauche la première tôle métallique (2), dans lequel la première tôle métallique (2) et/ou la deuxième tôle métallique (3) est revêtue d'une couche de protection, le procédé comprenant :
- le prétraitement de la première tôle métallique (2) au moyen d'un faisceau laser (6), le faisceau laser (6) étant dirigé vers une surface de la première tôle métallique (2) à travers une pièce de pression creuse (15) d'une tête laser (12), et les caractéristiques du faisceau laser (6) étant adaptées de manière à créer plusieurs empreintes (23, 23a) espacées les unes des autres sur la surface de la première tôle métallique (2) ;
- le positionnement de la deuxième tôle métallique (3) sur la surface prétraitée de la première tôle métallique (2) ;
- l'application d'une force mécanique, de préférence comprise entre 0,3 et 3 kN, et plus particulièrement entre 0,3 et 1 kN pour une configuration de tête laser (12) de type Picker, ou entre 0,8 et 3 kN pour une configuration de tête laser (12) de type pistolet en C, au moyen de la pièce de pression creuse (15) de la tête laser (12), sur la première et la deuxième tôle métallique (2, 3) qui se chevauchent ;
- le soudage des première et deuxième tôles métalliques (2, 3) au moyen du faisceau laser (6), le faisceau laser (6) étant dirigé vers une surface de la deuxième tôle métallique (3) à travers la pièce de pression creuse (15) de la tête laser (12), et les caractéristiques du faisceau laser (6) étant adaptées de manière à créer une soudure (25), de préférence une soudure par cordon (25), entre la première et la deuxième tôle métallique (2, 3),
la puissance du faisceau laser (6) lors du prétraitement de la première tôle métallique (2) étant réduite d'un facteur compris entre 2 et 5 par rapport à la puissance du faisceau laser (6) lors du soudage de la première et de la deuxième tôle métallique (2, 3), de préférence de 2 à 4 kW à 600 à 1200 W, et plus particulièrement de 2,5 à 3,5 kW pour le soudage entre 800 et 1000 W pour la réalisation des empreintes.

2. Le procédé de soudage laser selon la revendication 1, dans lequel le déplacement du faisceau laser (6) lors du prétraitement de la première tôle métallique (2) est commandé mécaniquement de manière à ce que le faisceau laser n'entre pas en contact avec les parois intérieures de la pièce de pression creuse (15) de la tête laser (12), tout en créant simultanément un motif linéaire ou en zigzag (23) constitué de plusieurs empreintes (23a) espacées les unes des autres.

3. Le procédé de soudage laser selon la revendication 2, dans lequel le déplacement du faisceau laser (6) est réalisé par le déplacement mécanique d'un embout (18) d'un câble de transmission du faisceau laser (13) et de l'optique (19) fixée à l'embout (18) du câble de transmission du faisceau laser (13).

4. Le procédé de soudage laser selon l'une des revendications précédentes, dans lequel le faisceau laser (6) fonctionne en mode à onde continue (CW) ou en mode à onde quasi continue (QCW).

5. Le procédé de soudage laser selon l'une des revendications précédentes, dans lequel le faisceau laser (6), lors du prétraitement de la première tôle métallique (2), est modulé de manière à produire un certain nombre d'impulsions lumineuses laser en forme de méandres ou de sinusoïdes, chaque impulsion lumineuse laser produisant une empreinte (23a) sur la surface de la première tôle métallique (2), et de préférence la durée de l'impulsion lumineuse laser choisie étant comprise entre 15 et 25 ms, de préférence d'environ 20 ms.

6. Le procédé de soudage laser selon l'une des revendications précédentes, comprenant en outre :
- la collecte de la lumière rétrodiffusée dans le cœur de la fibre d'un câble de transmission du faisceau laser (13);
- la génération d'un signal de commande (27) sur la base de l'analyse de la lumière rétrodiffusée collectée avec un profil de signal prédéterminé (28) ; et
- l'ajustement des caractéristiques du faisceau laser (6) si le signal de commande (27), basé sur l'analyse de la lumière rétrodiffusée collectée, s'écarte du profil de signal prédéterminé (28) d'une quantité supérieure à un seuil prédéterminé.

7. Le procédé de soudage laser selon l'une des revendications précédentes, dans lequel la couche du revêtement de protection comprend une couche de zinc (Zn), un revêtement à base d'un alliage de zinc (Zn) ou d'autres matériaux de revêtement présentant une température de vaporisation inférieure à la température de fusion de la tôle métallique.
